# EUROPÄISCHE PATENTSCHRIFT

(11) **EP 0 686 498 B1**
(45) Veröffentlichungstag und Bekanntmachung des Hinweises auf die Patenterteilung: **01.12.1999**
(21) Anmeldenummer: 95108489.6
(22) Anmeldetag: 02.06.1995
(51) Int. Cl.: B32B 27/12, D06N 7/00, A43B 7/06, A41D 31/02

(54) **Verbundstoff und seine Verwendung in Schuhwerken**
Composite material and its use in footwear
Matériau composite et son utilisation dans des chaussures

(30) Priorität: 06.06.1994 DE 4419801
(43) Veröffentlichungstag der Anmeldung: 13.12.1995
(73) Patentinhaber: Akzo Nobel N.V., 6824 BM Arnhem (NL)
(72) Erfinder: Haderlein, Manfred, D-42781 Haan (DE)
(74) Vertreter: Fett, Günter, Dipl.-Ing.

(56) Entgegenhaltungen:
- EP-A- 0 077 525
- EP-A- 0 313 261
- EP-A- 0 341 430
- EP-A- 0 415 758
- EP-A- 0 599 587
- WO-A-89/07523
- DE-A- 2 737 756
- DE-A- 2 854 464
- DE-A- 3 820 099
- DE-A- 4 003 764
- DE-U- 8 910 900
- US-A- 4 433 026
- US-A- 5 022 096

## Beschreibung

Die Erfindung betrifft einen Verbundstoff insbesondere für Schuhwerke, Bekleidungsstücke, Kopfbedeckungen und Handschuhe, welcher eine wasserdichte, wasserdampfdurchlässige Funktionsschicht umfaßt.

Es ist bekannt, daß wasserdichtes, wasserdampfdurchlässiges Membranmaterial in Schuhen oder Bekleidungsstücken verwendet wird, wobei sich auf der Innenseite der Außenschicht oder auf der des Obermaterials von z.B. Schuhen die Funktionsschicht mit dem Membranmaterial aus Kunststoff befindet. Die Verwendung der Funktionsschicht führt aufgrund ihrer Dampfdurchlassigkeit und Atmungsaktivität zu angenehmen Trageigenschaften. Solches Membranmaterial enthält im Falle der mikroporösen Membran Polyurethan und im Falle der homogenen Membran hydrophilen Polyester.

Häufig bestehen Schuhe aus Schäften mit atmungsinaktiven oder mit nur unzureichend atmungsaktiven Außenmaterialien. Diese Außenmaterialien führen dazu, daß die durch Schweißabsonderung hervorgerufene Feuchtigkeit nur unzulänglich nach außen geführt wird. Die auf der Innenseite des Schaftes angeordnete Futterschicht nimmt zwar die Feuchtigkeit auf gibt sie jedoch nur ungenügend an die Funktionsschicht ab. Aufgrund diese Mangels bilden sich besonders an den Stellen, an denen verstärkt Schweißbildung auftritt, z.B. an der Fußinnenseite und in den vorderen Zehenbereichen dermaßen starke Feuchtigkeitsansammlungen, daß das Durchdringungsvermögen der Feuchtigkeit durch die Membran an dieser Stelle nicht mehr ausreicht und sich sogenannte Feuchtigkeits- oder Nässenester in der Futterschicht bilden. Desweiteren kann die Futterschicht aufgrund der Feuchtigkeitsnester über Nacht nicht trocknen und vermittelt dem Benutzer wegen des Kältegefühls bei Wiederbenutzung der Schuhe ein unangenehmes Tragegefühl.

Abgesehen davon bestehen auch gesundheitliche Bedenken, herkömmliches Schuhwerk zu tragen, bei denen die Gefahr der Bildung von Feuchtigkeitsnestern bestehen, da das feucht-warme Klima im Schuh Hauterkrankungen der Füße, insbesondere Pilz- und Bakterienerkrankungen, hervorruft. Auch aufgrund des ständigen Gebrauchs dieser Schuhe kann das Futter nur mehr sehr schlecht austrocknen und ruft wegen der mangelnden Belüftung unangenehme Gerüche der Schuhe hervor.

Um diesen Mängeln abzuhelfen, schlägt die DE-OS 38 20 099 ein Schuhwerk vor, welches eine teilweise Auskleidung mit einem flächigen, flexiblen, druckstabilen Ventilationsschichtmaterial umfaßt. Das Ventilationsschichtmaterial besteht aus Längsluftleitkanälen, welche zum offenen Schaftende des Schuhs führen, und aus Querluftleitkanälen, welche zur Fußobenfläche hin gerichtet sind. Dieses Ventilationsschichtmaterial ist kompliziert und aufwendig aufgebaut, da je drei deltaformig gebündelte Längsstege einen Abstandshalter bilden. Eine Vielzahl im wesentlichen parallel und mit Abstand voneinander angeordneter Abstandshalter ist auf ihrer Unterseite mittels einer Vielzahl von bezüglich der Abstandshalter quer verlaufenden, im Abstand voneinander angeordneten und im wesentlich parallel zueinander verlaufenden Querstegen verbunden. Die Zwischenräume zwischen je zwei benachbarten Abstandshaltern bilden die Längsluftleitkanäle. Die Querluftleitkanäle, welche mit den Längsluftleitkanäle in Verbindung stehen, werden durch die Zwischenräume zwischen den Abstandshalter gebildet und leiten die Feuchtigkeit zu der Außenschicht.

Um eine ausreichende Weiterleitung der Feuchtigkeit aus dem Schuhinneren nach außen und eine entsprechende Belüftung zu gewährleisten, schlägt der Stand der Technik einen fünfschichtigen Aufbau des Schuhschafts vor, wobei entweder eine wasserdichte Außenschicht, eine Dämpfungsschicht, eine Schicht aus dem o.g. Ventilationsschichtmaterial, eine Isolationsmaterialschicht und eine Futterschicht oder eine Funktionsschicht zwischen der Außenschicht und dem Ventilationsschichtmaterial angeordnet werden.

Das Ventilationsschichtmaterial ist aufgrund seiner komplizierten Struktur, i.e. genaue Anordnung der Längs- und Querluftleitkanäle, sehr kostspielig in seiner Herstellung und verteuert somit die Produktion von mit einer Funktionsschicht ausgestatteten Schuhen. Da aber Schuhe Massenware sind, sollte es erforderlich sein, Materialien zu verwenden, welche einfach in ihrer Herstellung sind und einen herkömmlichen unkomplizierten Aufbau aufweisen.

Das Ventilationsschichtmaterial zeigt zwar eine hinreichende Druckstabilität und eine flexible Versteifung, jedoch ist das herkömmliche Ventilationsschichtmaterial nur in Schuhen mit Normalbelastungsdruck zu verwenden, eine Bedingung, auf welche die Druckschrift ausdrücklich hinweist.

Gefordert sind aber Schuhe, welche nicht nur einem Normalbelastungsdruck ausgesetzt sind, sondern auch höhere Belastungen ertragen können, welche auch bei Benutzung des Schuhs durch einen Normalbenutzer auftreten, die, wie die DE-OS 21 06 984 richtig erkannte, besonders durch stoßartige Beanspruchungen auftreten. Ebenso sollte das Schuhwerk aus Materialien aufgebaut sein, die nicht nur eine Versteifung und Druckstabilität zeigen sondern auch eine dauerhafte Rückstell-Elastizität garantieren. Gerade diese Eigenschaft des Schaftmaterials gewährleistet eine Form- und Polsterstabilität in den kritischen Zonen des Schaftes, z. B. im Knöchelbereich von Stiefeln oder Stiefeletten.

Ebenso sollte das Material, welches in Schuhen verwendet wird, mit einer beliebig einstellbaren Schichtdicke herstellbar sein, ohne daß Verluste an Steifigkeit und dauerhafter Rückstell-Elastiziät auftreten, um herstellungsbedingte leichte Variationen bez. der Schuhgröße ausgleichen zu können.

Ebenso wäre es wünschenswert, wenn die Auskleidung des Schuhes mit einem Material dermaßen erfolgt, daß die Auskleidung gleichzeitig als Polstermaterial wirken kann.

Die Aufgabe wird gelöst durch den Verbundstoff gemäß Hauptanspruch. Die Nebenansprüche betreffen Bekleidungstücke, Kopfbedeckungen, Handschuhe und Schuhwerke. Die Unteransprüche beziehen sich auf bevorzugte Ausführungsformen der Erfindungsgegenstände.

Die Erfindung betrifft einen Verbundstoff, welcher eine wasserdichte, wasserdampfdurchlässige Funktionsschicht enthält, welcher sich dadurch auszeichnet, daß als luftdurchlässige Wirkwarenschicht ein textiles Abstandsgewirke auf einer Seite der Funktionsschicht angeordnet ist, daß die Funktionsschicht mit der Wirkwarenschicht, vorzugsweise punkt-, gitter- und / oder streifenförmig, verklebt ist, und das textile Abstandsgewirke auf seiner der Funktionsschicht gegenüberliegenden Seite eine Futterschicht aufweist.

Ein weiterer Gegenstand der Erfindung bezieht sich auf ein Stofflaminat mit einer Außenschicht und einem o.g. Verbundstoff, das dadurch gekennzeichnet ist, daß die Außenschicht auf der der Wirkwarenschicht gegenüberliegenden Seite der Funktionsschicht des Verbundstoffs angeordnet ist.

Ein weiterer Gegenstand der Erfindung betrifft ein Bekleidungsstück, eine Kopfbedeckung, Handschuhe und ein Schuhwerk mit einer Außenschicht, welche dadurch gekennzeichnet sind, daß mindestens ein Teil derselben auf der Innenseite der Außenschicht mit dem erfindungsgemäßen Verbundstoff ausgekleidet ist.

Die Stand der Technik vermittelt dem Fachmann die Erkenntnis, die Verwendung des Ventilationsschichtmaterials und der Funktionsschicht reiche zusammen mit der beim Abrollen des Fußes entstehenden Pumpwirkung für eine ausreichende Belüftung und eine gleichzeitige Weiterleitung der Feuchtigkeit aus dem Schuhinneren über die Funktionsschicht zum Außenmaterial aus.

Es wird jedoch festgestellt, daß diese Bedingungen nicht hinreichend sind, die in allen Bereichen des Schuhinneren auftretende Feuchtigkeit abzuleiten, was sich bereits durch das Entstehen von Feuchtigkeitsnestern manifestiert. Der Erfindung liegt im Gegenteil die Erkenntnis zugrunde, daß für den Fachmann unerwarteterweise nur dann eine ausreichende Belüftung sowohl in den Problemzonen von z.B. Schuhen, e.g. an der Fußinnenseite, oder von Bekleidungsstücken, e.g. im Schulter- und Achselhöhlenbereich, ermöglicht wird, wenn ein Feuchtigkeitstransport nicht durch Luftleitkanäle mit dem limitierende Faktor ihres Durchmessers stattfindet sondern vielmehr durch die gesamte Gewebe- oder durch die gesamte Wirkstruktur des Verbundstoffs in Längs- und Querrichtung erfolgt.

Durch den erfindungsgemäßen Verbundstoff und seinen Einsatz im Schuhwerk wird erstmals ermöglicht, daß
erstens die Feuchtigkeit gleichmäßig durch die gesamte Oberfläche des erfindungsgemäßen Verbundstoffs - nicht begrenzt durch den Durchmesser der Querluftleitkänäle des herkömmlichen Ventilationsschichtmaterials - in denselben rasch eindringt,
zweitens die Feuchtigkeit sich schnell in Längsrichtung durch die gesamte Wirkwarenschicht des erfindungsgemäßen Verbundstoffs - nicht begrenzt durch den Durchmesser der Längsluftleitkänäle des herkömmlichen Ventilationsschichtmaterials - verteilt und
drittens die Feuchtigkeit sich auf die gesamte Oberfläche der Funktionsschicht verteilt wird; wohingegen beim Stand der Technik die Querluftleitkanäle die Feuchtigkeit zur Außenschicht führen, die Längsluftleitkanäle jedoch, da der Feuchtigkeitstransfer über die Querluftleitkanäle zur Außenschicht nicht ausreicht, die Aufgabe haben, die Feuchtigkeit nunmehr in Richtung zu dem oberen Schuhschaftrand abzuleiten.

Das bedeutet, daß im Gegensatz zum Stand der Technik sogar bei Verwendung von atmungschwachen Außenmaterialien für die Außenschicht mittels des erfindungsgemäßen Verbundstoffs in Schuhen die Abführung von Schwitzfeuchtigkeit aus dem Schuhinneren obendrein aus den Problembereichen, wo starke Feuchtigkeit entsteht, hinreichend erfolgt und das Entstehen von Feuchtigkeitsnestern vollkommen unterbindet, so daß Schuhe nicht mit Öffnungen am Schaftende versehen werden müssen

Es tritt dementsprechend nicht der Nachteil auf daß bei dem Schuhwerk mit dem gemäß in DE-OS 38 20 099 offenbarten Schaftaufbau die Durchdringungskapazität der Querluftleitkanäle und der Außenschicht für die Schwitzfeuchtigkeit im Bereich der Feuchtigkeitsnester erschöpft ist, jedoch die Außenschicht in Hinsicht auf ihre gesamte Oberfläche sehr wohl imstande ist, diese Feuchtigkeit in ausreichender Menge abzuführen.

Gerade wegen des Auftretens von Feuchtigkeitsnestern greift die DE-OS 38 20 099 auf herkömmliche Entlüftungsmechanismen, nämlich die Feuchtigkeitsweiterleitung direkt nach außen zu einer Schaftmaterialöffnung unter Inkaufnahme eines weiteren Mangels, daß nunmehr die Gefahr des Wassereintritts durch die obere Schaftöffnung in das Ventilationsschichtmaterial besteht. Diese Gefahr wird in dieser Druckschrift vollkommen übersehen. Dabei zeigt es sich, daß das Ventilationsschichtmaterial sich wie ein Schwamm mit Wasser aufsaugt.

Die Verwendung eines textilen Abstandsgewirkes bedeutet im Gegensatz zu DE-OS 38 20 099 den Einsatz eines preiswerten sowie einfach und schnell herzustellenden Materials, sowie die Herstellungskosten bei Schuhwerken, Kopfbedeckungen, Bekleidungsstücken und Handschuhen niedrig zu halten, so daß folglich die Produkte für jedermann erschwinglich sind.

Die Gewirkebahnen sind in Querrichtung zur Wirkwarenoberfläche luftdurchlässig, wobei die Gewirkebahnen über luftdurchlässige Öffnungen oder Poren verfügen können. Da die Abstandsstruktur des Abstandsgewirkes im wesentlichen parallel und im wesentlichen in Querrichtung zur Wirkwarenoberfläche luftdurchlässig ist, wird nicht nur eine gleichmäßige Verteilung auf die Oberfläche der Funktionsschicht sondern auch ein schneller Transport der Feuchtigkeit aus dem Schuhinnenraum zur Funktionsschicht ermöglicht.

Der Abtransport der Fußfeuchtigkeit wird verstärkt durch die infolge von Gehbewegungen im Schuh hervorgerufene Pumpwirkung, so daß der Abtransport der Fußfeuchtigkeit durch die Wirkwarenschicht noch zusätzlich in dem erfindungsgemäßen Schuhwerk verstärkt wird.

In einer besonders bevorzugten Ausführungsform ist es möglich, daß die Abstandsstruktur im wesentlichen auch in Richtung zum freiem Schaftende luftdurchlässig ist Die Wirkwarenschicht ist einfach herstellbar, da aufgrund herkömmlicher Herstellungsverfahren die Abstandsstruktur bahnflächenverbindende Maschen mit, vorzugsweise monofilen, elastischen oder flexiblen Fäden enthält, die abwechselnd mit je einer Gewirkebahn verbunden oder vermascht sein können. Darüber hinaus sind vorzugsweise die die bahnenflächenverbindenden Maschen bildenden Monofilamente Abstandshalter zu verwenden.

Das textile Abstandsgewirke kann Kettenwirkware oder Raschelware sein, wobei die Kettenwirkware doppelflächig ist. Ebenso können die Gewirkebahnen Abstandshalter-Bändchen oder Stege aufweisen. Weiterhin ist es möglich, die Abstandsstruktur und / oder die Gewirkebahnen mit Rechts-Rechts- oder Rechts- Links- Gewirkestruktur herzustellen. Da die Abstandsstruktur eine Web-, Strick- oder Vliesschicht sein kann, sind die Herstellungsmethoden derselben aufgrund der Verwendbarkeit aller möglichen Garne, wie Naturfasern und / oder synthetische Fasern - multifil oder monofil - nicht auf spezielle abgestellt und daher niedrig sowie somit die Kosten zur Herstellung eines Produkts mit diesem Verbundstoff, e.g. Schuhwerk, Bekleidungsstück, Handschuhe, Kopfbedeckungen, entsprechend gering.

Bei Verwendung des erfindungsgemäßen Verbundstoffs in Schuhen von Sportlern oder von Normalbenutzern mit überaus starker Schwitzfeuchtigkeit können zusätzlich - jedoch nicht notwendigerweise - in die Abstandsstruktur in Quer- und Längsrichtung luft- und feuchtigkeitsdurchlässige Luftleitkanäle eingebaut werden, welche vorzugsweise parallel zur Wirkwarenoberfläche und in Richtung zum freiem Schaft ausgerichtet sind.

Die Funktionsschicht ist wasserdicht und wasserdampfdurchlässig. Hierfür sind beispielsweise Funktionsschichten bevorzugt, die eine Folie oder Membran mit gerecktem Polytetrafluorethylen (PTFE) (Gore-Tex), Polyetherester, Polyester und / oder Polyurethan aufweisen. Die Membran mit Polytetrafluorethylen kann mikroporös sein und vorzugsweise mit Polyurethan oder anderen Polymeren beschichtet sein.

In einer weiteren Ausführungsform kann die Membran mit Polyetherester und / oder Polyester nicht porös sondern homogen sein, wobei vorzugsweise hydrophiler Polyester bzw. hydrophiler Polyetherester verwendet werden. Diese Membran (Sympatex-Folie) weist vorteilhafterweise eine Dichte von z.B. 10 µm oder 15 µm und eine Dichte 1,27g/cm³ auf Sie zeichnet sich durch hervorragende Atmungsaktivität, Wasserdichte und Wasserdampfdurchlässigkeit von über 2700g/m² aus.

Besonders bevorzugt ist eine Funktionsschicht mit der homogenen Membran, da diese nicht nur hervorragende Dampfdurchlaßeigenschaften sondern gleichfalls insbesondere bei Einsatz in Winterschuhen einen ausgezeichneten Kälteschutz bietet. Zudem wird die bei starker Schwitzfeuchtigkeit hervorgerufene unangenehme Feuchtfühlgrenze durch Verwendung der homogenen Membran als Funktionsschicht stark herabgesetzt.

In einer vorteilhaften Ausgestaltung des Erfindunsgegenstands enthält die Funktionsschicht ein wasserdichtes, wasserdampfdurchlässiges Material, wobei das wasserdichte, wasserdampfdurchlässige Material eine Folie mit gerecktem Polytetrafluorethylen, eine Polyetherester-Membran, eine Polyester-Membran und / oder eine mikroporöse, vorzugsweise Polyurethan-, Beschichtung sein kann. Die Polyetherester-Membran oder Polyester-Membran kann homogen sein.

Die homogene Membran erweitert jedoch zudem aufgrund ihrer einzigartigen Eigenschaft, nämlich für hautirritierende, netzende oder ätzende Flüssigkeiten nicht durchgängig zu sein, das Einsatzspektrum des erfindungsgemäßen Verbundstoffs ebenso auf den industriell-chemischen Bereich. Die Verwendung des erfindungsgemäßen Verbundstoffs in Schuhen, Bekleidungsstücken für Arbeiten im chemischen Bereich schützt den Benutzer ganzflächig vor Säuren und Basen, ohne daß die Gefahr des übermäßigen Schwitzens für den Benutzer bei seiner Tätigkeit zu befürchten ist.

Ein Verbundstoff mit einer Funktionsschicht aus der o.g. Membran eignet sich überdies, da die Membran eine Reißdehnung von ca. 300% und eine bleibende Dehnung von 20% nach 50% Gesamtausdehnung hat.

Vorzugsweise kann die Wirkwarenschicht auf ihrer der Funktionsschicht gegenüberliegenden Seite eine Futterschicht aufweisen, wobei die Futterschicht eine Frotteeschicht, Ziegen-, Schaf-, Rind-, Schweinslederfutterschicht, Samtschicht, Kamelhaarstoffschicht, gestrickte oder gewebte Fellschicht oder Gewebeschicht sein kann, vorteilhafterweise aus Baumwolle, Schurwolle, synthetischen Fasern und / oder regenerierter und / oder modifizierter Cellulose.

Die Außenschicht kann mindestens ein Vertreter der eine Lederschicht, Textilschicht, textilartige Schicht und Gewebe umfassenden Gruppe sein. Möglich sind für die Außenschicht als Obermaterial Segeltuchstoffe, Chintz, Everglaze, Frottierware, Samt, Manchester, Cord, Velveton, Norzon, Ledertuch, Ledersamt, Duvetine, gestrickte oder gewirkte Gewebe, Satin, Fell, Fellimitation, Rauh-, Glatt-, Lackleder oder geschliffenes, geprägtes, geschrumpftes oder gekrispeltes Leder.

Im Prinzip kann die Außenschicht auf der der Funktionsschicht gegenüberliegenden Seite der Wirkwarenschicht angeordnet sein. Bevorzugt kann ein Stofflaminat mit einer Außenschicht und dem erfindungsgemäßen Verbundstoff dadurch ausgezeichnet sein, daß die Außenschicht auf der der Wirkwarenschicht gegenüberliegenden Seite der Funktionsschicht des Verbundstoffs angeordnet ist. Von Vorteil ist es, wenn bei dem Stofflaminat die Futterschicht eine Frotteeschicht, Samtschicht, Kamelhaarstoffschicht, gestrickte oder gewirkte Fellschicht oder Gewebeschicht ist und sie Baumwolle, Schurwolle, synthetische Fasern und / oder regenerierte und / oder modifizierte Cellulose enthält. Bevorzugte Ausgestaltungen des Stofflaminats können eine, vorzugsweise luftdurchlässige und / oder mit Aluminium bedampfte, Isolationsmaterialschicht, bevorzugterweise zwischen der Funktionschicht und der Außenschicht, zwischen der Funktionsschicht und der Wirkwarenschicht und / oder auf der außenliegenden Seite der Außenschicht, enthalten. Die Stofflaminate können erfindungsgemäß in Bekleidungsstücken, Handschuhen, Kopfbedeckungen und in Schuhen Verwendung finden.

Ebenso kann der erfindungsgemäße Verbundstoff in einem Bekleidungsstück mit einer Außenschicht verwendet werden, bei welchem mindestens ein Teil des Bekleidungsstückes auf der Innenseite der Außenschicht mit dem Verbundstoff ausgekleidet ist. Auch ist es möglich, eine Kopfbedeckung mit einer Außenschicht herzustellen, wobei mindestens ein Teil der Kopfbedeckung auf der Innenseite der Außenschicht mit dem erfindungsgemäßen Verbundstoff ausgekleidet ist. Gleichfalls kann ein Handschuh mit einer Außenschicht und dem erfindungsgemäßen Verbundstoff versehen sein, welcher dadurch gekennzeichnet sind, daß mindestens ein Teil des Handschuhs auf der Innenseite der Außenschicht mit dem erfindungsgemäßen Verbundstoff versehen ist.

In einer besonderen Ausführungsform kann ein Schuhwerk mit einer Außenschicht und dem Verbundstoff so aufgebaut sein, daß mindestens ein Teil des Schuhwerks auf der Innenseite der Außenschicht mit dem erfindungsgemäßen Verbundstoff ausgekleidet ist. Dabei kann die Außenschicht auf der der Wirkwarenschicht gegenüberliegenden Seite der Funktionsschicht oder auf der der Funktionsschicht gegenüberliegenden Seite der Wirkwarenschicht angeordnet sein.

Vorteilhaft - aber nicht notwendigerweise - ist es, wenn die Abstandsstruktur im wesentlichen in Richtung zum freien Schaftende luftdurchlässig ist und vorzugsweise der Verbundstoff im Bereich des Öffnungsrandes des Schaftes mit einem Schutzkragen versehen ist.

Weitere Einzelheiten, Aspekte und Vorteile der vorliegenden Erfindung ergeben sich aus der nachfolgenden Beschreibung eines Ausführangsbeispiels des erfindungsgemäßen Schuhwerks mit Durchlüftungsaufbau.

### Ausführungsbeispiel

Von der Fußseite zur Außenseite hin betrachtet kommt als erstes eine Wollfütterschicht, anschließend ein textiles Abstandsgewirke, wobei die Gewirkebahnen aus Baumwolle und die Abstandsstruktur mit Rechts-Rechts-Gewirkestruktur aus synthetischen Garnen bestehen. Die zwischen der Wollfütterschicht und der Lederschicht als Außenschicht befindliche Funktionsschicht ist eine homogene, einen hydrophilen Polyester umfassende Membran.

Die Fußfeuchtigkeit dringt in die Wollfütterschicht ein und wird aufgrund ihrer guten Verteilung in dem textilen Abstandsgewirke auf die gesamte Oberfläche der homogenen Membran schnell verteilt. Dadurch erreicht man ein rasches und wirksames als auch gleichmäßiges Durchdringen der Feuchtigkeit durch die Membran. Die Stellen, wo eine starke Schweißbildung festzustellen ist, wie der Fußinnenraum und der Zehenbereich, zeigen keine erhöhten Feuchtigkeitsansammlungen oder Nässenester. Somit erfährt der Benutzer kein unangenehmes Tragegefühl.

Die hohe Flexibilität und bleibende Rückstell-Elastizität der Wirkwarenschicht des Schuhwerks bewirken sowohl eine faltenfreie Versteifung des Schafts als auch die Verhinderung einer Futterschichtfaltung, so daß sich auch bei intensiver Benutzung des Schuhwerks keine Druckstellen an den Füßen des Benutzers bilden.

Die in DE-OS 38 20 099 erwähnte eingeschränkte Fähigkeit des Lederschafts, Fußfeuchtigkeit von innen nach außen durchdringen zu lassen, ist folglich nur dann gegeben, wenn die Feuchtigkeit auf die Membran- und Lederoberfläche ungleichmäßig verteilt wird. Der Stand der Technik bringt den Fachmann irrigerweise in die Richtung, daß die Fähigkeit des Lederschafts, Fußfeuchtigkeit von innen nach außen durchzulassen, nur sehr begrenzt sei, und ein Schuhwerk mit dem in dieser Druckschrift komplizierten Aufbau eines Ventilationsschichtmaterials erforderlich mache. Sie verkennt jedoch den Umstand völlig, daß es einzig und allein
auf die rasche Ableitung der Fußfeuchtigkeit aus Zonen starker Schweißproduktion,
auf deren rasche Verteilung auf die gesamte Wirkwarenschicht in Längs- und Querrichtung sowie
deren gleichmäßige Verteilung auf die gesamte Oberfläche der Membran und damit auch die gesamte Oberfläche der Außenschicht ankommt.

Unter Verwendung des erfindungsgemäßen Verbundstoffs in z.B. Schuhwerken reicht somit sogar die begrenzte Transportfähigkeit des Leders für Feuchtigkeit und Luft (in entgegengesetzter Richtung) aus, da die Feuchtigkeit aus den Zonen starker Nässeansammlungen, i.e. Feuchtigkeits- oder Nässenester, gleichmäßig nicht nur auf die gesamte Oberfläche der Membran sondern verständlicherweise auch auf die der Lederschicht verteilt wird.

Das erfindungsgemäße Schuhwerk beugt wegen der schnellen Weiterleitung der Feuchtigkeit aus dem Schuhinnern der Bildung von Hauterkrankungen, wie Pilz- und Bakterienbefall, der Füße auch bei starkem und häufigem Benutzen des erfindungsgemäßen Schuhwerks vor.

Aufgrund der hohen Dauerelastizität und Rückstell-Elastizität der Wirkwarenschicht - auch bei starker Dauerbelastung - in Kombination mit der Funktionsschicht ist im übrigen die Verwendung des Verbundstoffs als Polstermaterial im Schuh empfehlenswert, so daß es herstellungsbedingte leichte Variationen bez. der Schuhgröße auszugleichen vermag. Zudem bietet es auch wegen seiner dauerhaften Rückstell-Elastizität als Sohleninnenbelag an.

Aufgrund der Vorteile des erfindungsgemäßen Verbundstoffs bzw. Stofflaminats ist deren Verwendung in Schuhwerken, vorzugsweise Trekking-, Langlauf-, Reit-, Curling-, Sport-, bevorzugterweise Tennis-, Basket-, Turnschuhen, Bike-, Jogging-, Motorrad-, Kinderbottine-, Straßen-, Wanderschuhen, Slippers, Stiefeletten, Arbeits- und/oder Sicherheitsschuhen überaus vorteilhaft.

Die o.g. Gründe ermöglichen auch den Einsatz des Verbundstoffs bzw. Stofflaminats in den erfindungsgemäßen Bekleidungsstücken, Handschuhen und Kopfbedeckungen mit deren überraschend als vorteilhaft anzusehenden Eigenschaften.

## Patentansprüche

1. Verbundstoff, welcher eine wasserdichte, wasserdampfdurchlässige Funktionsschicht enthält, **dadurch gekennzeichnet,** daß als luftdurchlässige Wirkwarenschicht ein textiles Abstandsgewirke auf einer Seite der Funktionsschicht angeordnet ist, daß die Funktionsschicht mit der Wirkwarenschicht, vorzugsweise punkt-, gitter- und / oder streifenförmig, verklebt ist, und das textile Abstandsgewirke auf seiner der Funktionsschicht gegenüberliegenden Seite eine Futterschicht aufweist.

2. Verbundstoff nach Anspruch 1, **dadurch gekennzeichnet**, daß die Abstandsstruktur bahnflächenverbindende Maschen mit, vorzugsweise monofilen, flexiblen Fäden enthält, die abwechselnd mit je einer Gewirkebahn verbunden sind.

3. Verbundstoff nach Anspruch 2, **dadurch gekennzeichnet**, daß die die bahnflächenverbindenden Maschen bildenden Monofilamente Abstandshalter sind.

4. Verbundstoff nach einem der Ansprüche 1 bis 3, **dadurch gekennzeichnet**, daß das textile Abstandsgewirke Kettenwirkware oder Raschelware ist.

5. Verbundstoff nach einem der Ansprüche 1 bis 4, **dadurch gekennzeichnet**, daß die Funktionsschicht ein wasserdichtes, wasserdampfdurchlässiges Material enthält.

6. Verbundstoff nach Anspruch 5, **dadurch gekennzeichnet,** daß das wasserdichte, wasserdampfdurchlässige Material eine Folie mit gerecktem Polytetrafluorethylen, eine PolyesterMembran, eine Polyetherester-Membran oder eine mikroporöse, vorzugsweise Polyurethan-, Beschichtung ist.

7. Verbundstoff nach Anspruch 6, **dadurch gekennzeichnet,** daß die Polyester-Membran oder Polyetherester-Membran homogen ist.

8. Verbundstoff nach einem der Ansprüche 1 bis 7, **dadurch gekennzeichnet**, daß die Futterschicht eine Frotteeschicht, Samtschicht, Kamelhaarstoffschicht, gestrickte oder gewirkte Fellschicht oder Gewebeschicht ist.

9. Verbundstoff nach einem der Ansprüche 1 bis 7, **dadurch gekennzeichnet**, daß die Futterschicht Baumwolle, Schurwolle, synthetische Fasern und / oder regenerierte und / oder modifizierte Cellulose enthält.

10. Stofflaminat mit einer Außenschicht und einem Verbundstoff nach einem der Ansprüche 1 bis 9, **dadurch gekennzeichnet,** daß die Außenschicht auf der der Wirkwarenschicht gegenüberliegenden Seite der Funktionsschicht des Verbundstoffs angeordnet ist.

11. Stofflaminat nach Anspruch 10, **dadurch gekennzeichnet,** daß die Außenschicht mindestens ein Vertreter der eine Lederschicht, Textilschicht, textilartige Schicht und Gewebe umfassenden Gruppe ist.

12. Stofflaminat nach einem der Ansprüche 10 oder 11, **dadurch gekennzeichnet,** daß eine, vorzugsweise luftdurchlässige, Isolationsmaterialschicht, bevorzugterweise zwischen der Funktionschicht und der Außenschicht, zwischen der Funktionsschicht und der Wirkwarenschicht und / oder auf der außenliegenden Seite der Außenschicht, vorhanden ist.

13. Bekleidungsstück mit einer Außenschicht, **dadurch gekennzeichnet**, daß mindestens ein Teil des Bekleidungsstückes auf der Innenseite der Außenschicht mit dem Verbundstoff nach einem der Ansprüche 1 bis 9 ausgekleidet ist.

14. Kopfbedeckung mit einer Außenschicht, **dadurch gekennzeichnet**, daß mindestens ein Teil der Kopfbedeckung auf der Innenseite der Außenschicht mit dem Verbundstoff nach einem der Ansprüche 1 bis 9 ausgekleidet ist.

15. Handschuhe mit einer Außenschicht, **dadurch gekennzeichnet**, daß mindestens ein Teil des Handschuhs auf der Innenseite der Außenschicht mit dem Verbundstoff nach einem der Ansprüche 1 bis 9 ausgekleidet ist.

16. Schuhwerk mit einer Außenschicht, **dadurch gekennzeichnet**, daß mindestens ein Teil des Schuhwerks auf der Innenseite der Außenschicht mit dem Verbundstoff nach einem der Ansprüche 1 bis 9 ausgekleidet ist.

17. Schuhwerk nach Anspruch 16, **dadurch gekennzeichnet**, daß die Außenschicht auf der der Wirkwarenschicht gegenüberliegenden Seite der Funktionsschicht angeordnet ist.

18. Schuhwerk nach Anspruch 16 oder 17, **dadurch gekennzeichnet**, daß die Abstandsstruktur im wesentlichen in Richtung zum freien Schaftende luftdurchlässig ist.

19. Schuhwerk nach Anspruch 18, **dadurch gekennzeichnet**, daß das Schuhwerk im Bereich des Öffnungsrands des Schafts mit einem Schutzkragen versehen ist.

20. Verwendung des Verbundstoffs nach einem der Ansprüche 1 bis 9 in Schuhwerken, vorzugsweise Trekking-, Langlauf-, Reit-, Curling-, Sport-, bevorzugterweise Tennis-, Basket-, Turnschuhen, Bike-, Jogging-, Motorrad-, Kinderbottine-, Straßen-, Wanderschuhen, Slippers, Stiefeletten, Arbeits- und / oder Sicherheitsschuhen.

## Claims

1. Composite material which contains a watertight, water-vapour-permeable functional layer, **characterised in that** a knitted textile spacer fabric is arranged on one side of the functional layer by way of air-permeable knitwear layer, in that the functional layer is glued to the knitwear layer, preferably in punctual, latticed and/or strip-wise manner, and the knitted textile spacer fabric comprises a lining layer on its side located opposite the functional layer.

2. Composite material according to Claim 1, **characterised in that** the spacer structure contains web-surface-connecting stitches with preferably monofilament, flexible threads which are each alternately connected to a web of knitted fabric.

3. Composite material according to Claim 2, **characterised in that** the monofilaments forming the web-surface-connecting stitches are spacers.

4. Composite material according to any one of Claims 1 to 3, **characterised in that** the knitted textile spacer fabric is warp-knitted fabric or raschel-knitted fabric.

5. Composite material according to any one of Claims 1 to 4, **characterised in that** the functional layer contains a watertight, water-vapour-permeable material.

6. Composite material according to Claim 5, **characterised** in that the watertight, water-vapour-permeable material is a sheet with stretched polytetrafluoroethylene, a polyester membrane, a polyether-ester membrane or a microporous coating, preferably a polyurethane coating.

7. Composite material according to Claim 6, characterised in that the polyester membrane or polyether-ester membrane is homogeneous.

8. Composite material according to any one of Claims 1 to 7**, characterised in that** the lining layer is a terry layer, a velvet layer, a camelhair-cloth layer, a knitted or machine-knitted fur layer or a woven-fabric layer.

9. Composite material according to any one of Claims 1 to 7, **characterised in that** the lining layer contains cotton, shear wool, synthetic fibres and/or regenerated and/or modified cellulose.

10. Laminated material with an outer layer and a composite material according to any one of Claims 1 to 9, **characterised in that** the outer layer is arranged on the side of the functional layer of the composite layer located opposite the knitwear layer.

11. Laminated material according to Claim 10, **characterised in that** the outer layer is at least one representative of the group comprising a leather layer, a textile layer, a textile-type layer and woven fabric.

12. Laminated material according to one of Claims 10 or 11, **characterised in that** a preferably air-permeable, insulating-material layer, in preferred manner between the functional layer and the outer layer, is present between the functional layer and the knitwear layer and/or on the external side of the outer layer.

13. Article of clothing with an outer layer, **characterised in that** at least one part of the article of clothing is lined on the inside of the outer layer with the composite material according to any one of Claims 1 to 9.

14. Head-covering with an outer layer**, characterised in that** at least one part of the head-covering is lined on the inside of the outer layer with the composite material according to any one of Claims 1 to 9.

15. Gloves with an outer layer, **characterised in that** at least one part of the glove is lined on the inside of the outer layer with the composite material according to any one of Claims 1 to 9.

16. Footwear with an outer layer, **characterised in that** at least one part of the footwear is lined on the inside of the outer layer with the composite material according to any one of Claims 1 to 9.

17. Footwear according to Claim 16, **characterised in that** the outer layer is arranged on the side of the functional layer located opposite the knitwear layer.

18. Footwear according to Claim 16 or 17, **characterised in** that the spacer structure is air-permeable substantially in the direction towards the free end of the upper.

19. Footwear according to Claim 18, **characterised in that** the footwear is provided with a protective collar in the region of the opening edge of the upper.

20. Use of the composite material according to any one of Claims 1 to 9 in footwear, preferably in trekking shoes, cross-country running shoes, riding shoes, curling shoes, sports shoes, in preferred manner tennis shoes, basketball shoes, gym shoes, cycling shoes, jogging shoes, motor-cycling shoes, children's bootees, street shoes, walking shoes, slippers, bootees, working shoes and/or safety shoes.

## Revendications

1. Matériau composite comprenant une couche fonctionnelle imperméable à l'eau et perméable à la vapeur d'eau, caractérisé par le fait que la couche fonctionnelle porte sur une de ses faces, comme couche de tricot perméable à l'air, un tricot textile d'espacement, que la couche fonctionnelle est collée à la couche de tricot, de préférence selon un motifs à points, à bandes et/ou de type grille, et que le tricot textile d'espacement présente une couche de doublure sur sa face opposée à la couche fonctionnelle.

2. Matériau composite selon la revendication 1, caractérisé par le fait que la structure d'espacement comporte des mailles reliant des bandes, constituées de fil flexible constitué de préférence d'un seul filament, reliées en alternance avec chacune des bandes de tricot.

3. Matériau composite selon la revendication 2, caractérisé par le fait que les monofilaments formant les mailles reliant des bandes sont des éléments espaceurs.

4. Matériau composite selon l'une des revendications 1 à 3, caractérisé par le fait que le tricot textile d'espacement est un tricot chaîne ou un tricot Rachel.

5. Matériau composite selon l'une des revendications 1 à 4, caractérisé par le fait que la couche fonctionnelle contient un matériau imperméable à l'eau et perméable à la vapeur d'eau.

6. Matériau composite selon la revendication 5, caractérisé par le fait que le matériau imperméable à l'eau et perméable à la vapeur d'eau est une feuille en poly(tétrafluoroéthylène) étiré, une membrane en polyester, une membrane en poly(éther ester) ou un revêtement microporeux, de préférence en polyuréthanne.

7. Matériau composite selon la revendication 6, caractérisé par le fait que la membrane en polyester ou la membrane en poly(éther ester) est homogène.

8. Matériau composite selon l'une des revendications 1 à 7, caractérisé par le fait que la couche de doublure est une couche d'éponge, une couche de velours, une couche en tissu de poil de chameau, une couche en peau tricotée ou une couche en tissé.

9. Matériau composite selon l'une des revendications 1 à 7, caractérisé par le fait que la couche de doublure est en coton, en laine vierge, en fibres synthétiques et/ou en cellulose régénérée et/ou modifiée.

10. Stratifié textile comportant une couche extérieure et un matériau composite selon l'une des revendications 1 à 9, caractérisé par le fait que la couche extérieure est disposée sur la face de la couche fonctionnelle du matériau composite qui est à l'opposé de la couche de tricot.

11. Stratifié textile selon la revendication 10, caractérisé par le fait que la couche extérieure est au moins un représentant du groupe formé par une couche de cuir, une couche de textile, une couche de type textil et un tissé.

12. Stratifié textile selon l'une des revendications 10 ou 11, caractérisé par le fait qu'une couche d'isolation, de préférence perméable à l'air, est présente de préférence entre la couche fonctionnelle et la couche extérieure, entre la couche fonctionnelle et la couche de tricot et/ou sur la face extérieure de la couche extérieure.

13. Vêtement comportant une couche extérieure, caractérisé par le fait qu'au moins une partie du vêtement est doublée sur la face intérieure de la couche extérieure avec le matériau composite selon l'une des revendications 1 à 9.

14. Coiffe comportant une couche extérieure, caractérisée par le fait qu'au moins une partie de la coiffe est doublée sur la face intérieure de la couche extérieure avec le matériau composite selon l'une des revendications 1 à 9.

15. Gants comportant une couche extérieure, caractérisés par le fait qu'au moins une partie de chaque gant est doublée sur la face intérieure de la couche extérieure avec le matériau composite selon l'une des revendications 1 à 9.

16. Chaussures comportant une couche extérieure, caractérisées par le fait qu'au moins une partie des chaussures est doublée sur la face intérieure de la couche extérieure avec le matériau composite selon l'une des revendications 1 à 9.

17. Chaussures selon la revendication 16, caractérisées par le fait que la couche extérieure est disposée sur la face de la couche fonctionnelle qui est à l'opposé de la couche de tricot.

18. Chaussures selon la revendication 16 ou 17, caractérisées par le fait que la structure d'espacement laisse passer l'air essentiellement en direction de l'extrémité libre de la tige.

19. Chaussures selon la revendication 18, caractérisées par le fait que les chaussures sont pourvues, au niveau du bord d'ouverture de la tige, d'un col de protection.

20. Utilisation du matériau composite selon l'une des revendications 1 à 9, dans des chaussures, de préférence des chaussures de trekking, des chaussures de course de fond, des chaussures d'équitation, des chaussures de curling, des chaussures de sport, de préférence de tennis, de basket, de gymnastique, des chaussures de vélo, des chaussures de jogging, des chaussures de moto, des chaussures d'enfants, des chaussures de ville, des chaussures de marche, des mocassins, des bottines, des chaussures de travail et/ou de sécurité.
